# EUROPÄISCHE PATENTSCHRIFT

(11) **EP 3 221 943 B1**
(45) Veröffentlichungstag und Bekanntmachung des Hinweises auf die Patenterteilung: **29.03.2023**
(21) Anmeldenummer: 15794505.6
(22) Anmeldetag: 03.11.2015
(51) Int. Cl.: H02H 3/20, H02H 3/087, H02H 7/00

(54) **SCHUTZSCHALTUNG FÜR EINEN ÜBERSPANNUNGS- UND/ODER ÜBERSTROMSCHUTZ**
PROTECTIVE CIRCUIT FOR OVERVOLTAGE AND/OR OVERCURRENT PROTECTION
CIRCUIT DE PROTECTION CONTRE LES SURTENSIONS ET/OU LES SURINTENSITÉS

(30) Priorität: 18.11.2014 DE 102014223486
(43) Veröffentlichungstag der Anmeldung: 27.09.2017
(73) Patentinhaber: Robert Bosch GmbH, 70442 Stuttgart (DE)
(72) Erfinder: EIMERTENBRINK, Ralf, 31141 Hildesheim (DE)
(86) Internationale Anmeldenummer: PCT/EP2015/075596
(87) Internationale Veröffentlichungsnummer: WO 2016/078909

(56) Entgegenhaltungen:
- EP-A2- 1 193 824
- WO-A1-98/07038
- FR-A1- 2 912 848
- US-A1- 2006 132 998
- US-A1- 2011 148 200
- US-A1- 2011 163 797
- US-A1- 2012 063 045

## Beschreibung

### Stand der Technik

Elektronische Geräte, insbesondere der Unterhaltungselektronik, zum Einsatz in Pkws sind für eine darin übliche Betriebsspannung von 12 Volt ausgelegt. Um derartige Geräte auch in Lkws oder Bussen mit einem dort mit einer Betriebsspannung von 24 Volt betriebenen Bordnetz versorgen zu können, werden häufig Gleichspannungswandler eingesetzt, durch die eine zusätzliche Betriebsspannung von 12 Volt bereitgestellt wird. Soll, wie üblich, ein in einer solchen Umgebung eingesetztes Gerät derart kurzschlussfest spezifiziert sein, dass alle Ein-und Ausgänge einen Kurzschluss gegen Masse und Fahrzeugbatterie standhalten, bedeutet dies, dass an den betreffenden Ein-und Ausgängen Fehlspannungen auftreten können, die deutlich höher sind als die Betriebsspannung des Geräts und damit auch deutlich höher als aus dieser Betriebsspannung insbesondere im Gerät abgeleitete Spannungen. Dies gilt insbesondere auch für den Fall, dass das Gerät von seiner Betriebsspannung - hier 12 Volt - z.B. durch einen Sicherungsausfall oder einen Ausfall eines zentralen Gleichspannungswandlers getrennt ist, oder für batteriebetriebene Geräte, die mit Fahrzeugmasse verbunden sind.

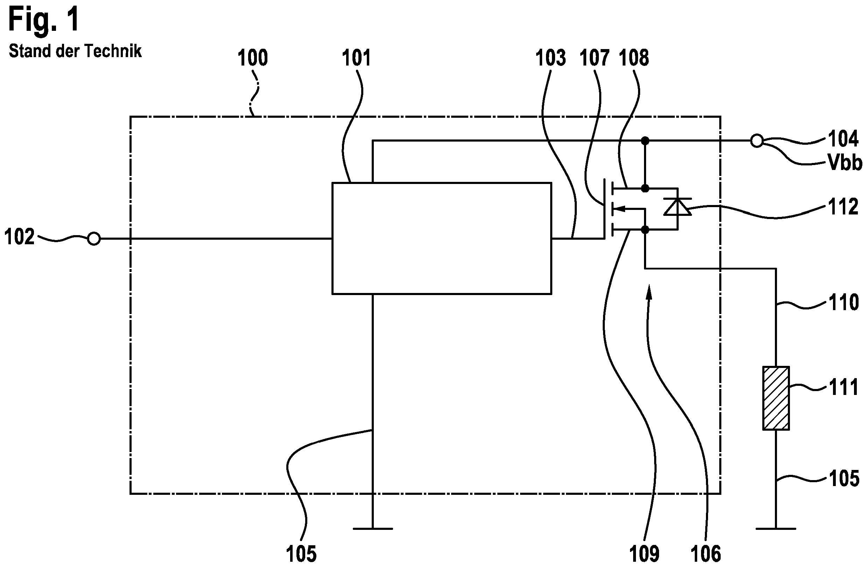

In Figur 1 ist anhand eines stark vereinfachten Blockschaltbilds eines Schaltungsbausteins des Typs BSP752T der Firma Infineon ein Beispiel eines Geräteanschlusses eines elektronischen Geräts dargestellt. Der Schaltungsbaustein 100 umfasst einen elektronischen Baustein 101 mit einem Eingangsanschluss 102, einem Ausgangsanschluss 103, einem Betriebsspannungsanschluss 104 zum Zuführen einer Betriebsspannung Vbb und einen Masseanschluss 105. Mit dem Ausgangsanschluss 103 ist ein Gate 107 eines N-MOSFET 106 verbunden, dessen Hauptstrompfad zwischen Drain 108 und Source 109 zwischen dem Betriebsspannungsanschluss 104 und einem Geräteanschluss 110 angeordnet ist. Eine Substratdiode 112, auch als "Body-Diode" bezeichnet, zwischen Drain 108 und Source 109 des MOSFET 106 ist für die Betriebsspannung Vbb in Sperrichtung gepolt. Zwischen dem Geräteanschluss 110 und Masse 105 ist eine Lastimpedanz 111 angeordnet. Der Geräteanschluss 110 stellt einen geschalteten Spannungsausgang dar, bei dem mit dem N-MOSFET 106 ein sogenannter "High Side Switch" gebildet ist. Im eingeschalteten Zustand ist der Hauptstrompfad des MOSFET 106 durch eine positive Gate-Source-Spannung niederohmig, im ausgeschalteten Zustand sind die Substratdiode 112 und der Hauptstrompfad des MOSFET 106 gesperrt. Es fließt kein Strom durch den MOSFET 106. Wird am Geräteanschluss 110 eine Spannung angelegt, die größer ist als die Betriebsspannung Vbb, fließt ein Strom vom Geräteanschluss 110 durch die Substratdiode 112 zum Betriebsspannungsanschluss 104. Je nach Beschaltung des Betriebsspannungsanschlusses 104 wird dort ein um die Diodenflussspannung der Substratdiode 112 vermindertes Potential der höheren Spannung am Geräteanschluss 110 hervorgerufen, oder der Strom durch die Substratdiode 112 überschreitet einen für sie zulässigen Wert. Das Anheben der Spannung am Betriebsspannungsanschluss 104 über die Betriebsspannung Vbb hinaus kann den elektronischen Baustein 101 und ggf. weitere Schaltungsanordnungen zerstören, die auch über den Betriebsspannungsanschluss 104 betrieben werden. Auch ohne eine solche Zerstörung kann es durch die Spannung am Geräteanschluss 110 zu einer unerwünschten Fremdspeisung des elektronischen Bausteins 101 und ggf. der weiteren Schaltungsanordnungen kommen.

Aus der Druckschrift FR 2 912 848 A1 bzw. US 2010/0164459 A1 mit Priorität der FR 2 912 848 A1 ist eine Spannungsbegrenzungseinrichtung für eine Einheit von Photovoltaik-Modulen bekannt, die enthält: (a) Mittel, die einen elektronischen Schalter für einen Strom der genannten Einheit von Photovoltaik-Modulen bilden; (b) Vergleichsmittel zum Vergleichen einer Spannung am Ausgang der Spannungsbegrenzungseinrichtung mit einem Referenzspannungswert; @Mittel zum Steuern der Mittel. die einen elektronischen Schalter für einen Strom der genannten Einheit von Photovoltaik-Modulen bilden, abhängig vom Ergebnis des von den Vergleichsmitteln zum Vergleichen einer Spannung am Ausgang der Spannungsbegrenzungseinrichtung mit einem Referenzspannungswert ausgeführten Vergleichs.

Aus der Druckschrift D2 (WO 98/07038 A1 ist eine Schaltungsanordnung zum Erfassen des Laststroms eines durch Feldeffekt steuerbaren Leistungs-Halbleiterbauelements mit sourceseitiger Last bekannt, mit einem weiteren durch Feldeffekt steuerbaren Halbleiterbauelement wobei die Drain-Anschlüsse und Gate-Anschlüsse beider Halbleiterbauelemente jeweils miteinander verbunden sind und durch das weitere Halbleiterbauelement ein Bruchteil des Laststroms fließt, mit Mitteln, die in Abhängigkeit von der Drain-Sourcespannunq der beiden Halbleiterbauelemente den Laststrom des weiteren Halbleiterbauelements einstellen, wobei weitere Mittel vorgesehen sind, die den durch das weitere Halbleiterbauelement fließenden Laststrom mit einem Referenzstrom vergleichen und ein Ausgangssignal erzeugen, wenn der Laststrom einen eingestellten Wert unterschreitet.

Aus der Druckschrift US 2012/063045 A1 sind Systeme und Verfahren zum Unterscheiden eines negativen Lastfehlers von einem positiven Eingangsspannungsstoß bekannt. Das System enthält einen Schaltkreis, der die Eingangsspannung abtastet, um ein Sperrsignal zu erzeugen, wenn der positive Eingangsspannungsstoß erkannt wird. Insbesondere kann der Schaltkreis einen Hochpassfilter zum Erleichtern der Erkennung des positiven Eingangsspannungsstoßes enthalten. Darüber hinaus wird das Sperrsignal dazu benutzt, einen Überstromkomparator zu steuern, der für eine Überstrom-Abschaltung sorgt. Typischerweise wird, wenn der positive Eingangsspannungsstoß erkannt wird, das Sperrsignal erzeugt, welches die Überstromantwort ausblendet, so dass die normale Betriebsweise ohne fehlerhafte Lastabschaltung fortgesetzt werden kann.

Aus der Druckschrift US 2011/148200 A1 ist ein Überspannungsschutz eines Schaltumformers bekannt. Beschrieben werden Ausführungen wenigstens eines Verfahrens und einer Vorrichtung zum Erzeugen einer geregelten Spannung. Eine Vorrichtung enthält einen Spannungsregler. Der Spannungsregler enthält eine Reglerschaltung zum Erzeugen einer geregelten Spannung aus einer ersten Spannungsversorgung und einer zweiten Spannungsversorgung sowie eine Spannungsspitzen-Schutzschaltung zum Schutz der Reglerschaltung gegen Spannungsspitzen, wobei die Spannungsspitzen-Schutzschaltung ein dissipatives Element und eine Ladungsspeicherschaltung enthält. Das Verfahren dient zum Erzeugen einer geregelten Spannung. Das Verfahren enthält eine Reglerschaltung die eine geregelte Spannung aus einer Eingangsspannung erzeugt, sowie einen Schutz der Reglerschaltung mit einer Spannungsspitzen-Schutzschaltung gegen Spannungsspitzen, wobei die Spannungsspitzen-Schutzschaltung ein dissipatives Element und eine Ladungsspeicherschaltung enthält.

Aus der Druckschrift EP 1 193 824 A2 ist eine Gegenspannungsschutzschaltung bekannt. Eine elektronische Schutzschaltung zum Schutz eines über eine Gleichspannungsquelle versorgten Steuergeräts gegen eine im Fall eine Umpolung auftretende Gegenspannung umfasst einen zwischen die Gleichspannungsquelle und das Steuergerät geschalteten Mosfet, dessen Source-Anschluss mit der positiven Klemme der Gleichspannungsquelle verbunden ist und dessen Gate-Anschluss über einen durch das Steuergerät ansteuerbaren Treiber so beaufschlagbar ist, dass der Mosfet eingeschaltet wird.

Die US 2006/0132998 A1 beschreibt eine Schaltung, die ein Umschalten zwischen einem aktiven Zustand und einem Ruhezustand ermöglicht. Hierfür sind mehrere Vergleichsstufen vorgesehen, die ein Schaltelement steuern und eine Energieversorgung einer anliegenden Last ermöglichen oder verhindern können. Die US 2011/163797 A1 offenbart einen Schaltplan, der eine Spannungsversorgung eines angeschlossenen Gerätes ermöglicht, wenn die benötigte Spannung geringer ist als die Versorgungsspannung. Wird ein Gerät mit einem gegenüber der Spannungsversorgung höherem Spannungsniveau angeschlossen, wird der elektrische Pfad zwischen der Spannungsversorgung und dem Gerät unterbrochen.

### Offenbarung der Erfindung

Die Erfindung hat die Aufgabe, einen Geräteanschluss eines elektronischen Geräts der beschriebenen Art auch für einen Kurzschluss gegenüber einer die Betriebsspannung überschreitenden Fehlspannung kurzschlussfest zu machen.

Diese Aufgabe wird durch eine Schutzschaltung gemäß Anspruch 1 gelöst.

Die Erfindung ermöglicht einen sicheren Schutz elektronischer Geräte der beschriebenen Art. Die erfindungsgemäße Schutzschaltung ist für analoge und geschaltete Geräteanschlüsse, z.B. auch für Ausgangsanschlüsse sogenannter "Klasse-D"-Endstufen, gleichermaßen vorteilhaft einsetzbar. Ein besonders bevorzugtes Einsatzgebiet sind im Zusammenhang mit einem Hochvolt-Bordnetz von Fahrzeugen, z.B. Lkws, Flugzeugen, usw., betriebene Niedervoltgeräte, die gegen Kurzschlüsse zur hohen Betriebsspannung des Hochvolt-Bordnetzes gesichert werden müssen. Die Erfindung ermöglicht eine zuverlässige Kurzschlussfestigkeit für alle Betriebszustände derartiger Niedervoltgeräte. Ein weiterer Vorteil liegt darin, dass bei ausgeschaltetem Geräteanschluss oder Wegfall der Versorgungsspannung des elektronischen Geräts der Geräteanschluss automatisch gegen Überspannungen und/oder Überströme geschützt ist.

Vorteilhafte Ausgestaltungen der Erfindung sind in den Unteransprüchen gekennzeichnet.

Die erfindungsgemäße Schutzschaltung weist ein einen Spannungsanstieg begrenzendes Element auf, ausgebildet insbesondere mit wenigstens einem induktiven Schaltungselement und/oder wenigstens einem kapazitiven Schaltungselement und/oder wenigstens einem resistiven Schaltungselement, zum Begrenzen einer zeitlichen Änderung der Vergleichsspannung gegenüber einer zeitlichen Änderung der an der äußeren Beschaltung anliegenden Spannung. Dadurch wird beim Auftreten eines Kurzschlusses der beschriebenen Art erreicht, dass die aus der an der äußeren Beschaltung anliegenden Spannung abgeleitete Messspannung schneller ansteigt als die Vergleichsspannung, insoweit diese durch den Kurzschluss ebenfalls beeinflusst wird, und damit die Vergleichsspannung für ein sicheres Ansprechen der Vergleichsstufe hinreichend übersteigt. In einer Abwandlung kann das wenigstens eine einen Spannungsanstieg begrenzende Element auch mit wenigstens einem resistiven Schaltungselement, ausgebildet sein.

Darüber hinaus umfasst die erfindungsgemäße Schutzschaltung wenigstens ein Spannungsformungselement, ausgebildet insbesondere mit wenigstens einer Diode, zum Bilden der Messspannung aus der an der äußeren Beschaltung anliegenden Spannung und zum Zuführen der Messspannung an die Vergleichsstufe. Bevorzugt wird die an der äußeren Beschaltung anliegende Spannung zum Bilden der Messspannung um einen vorgebbaren Betrag verringert. Dadurch wird erreicht, dass die Vergleichsschaltung bei nur geringem, für den Geräteanschluss noch unschädlichem Ansteigen der an der äußeren Beschaltung anliegenden Spannung das Schalterelement noch nicht zum Trennen der äußeren Beschaltung vom Geräteanschluss ansteuert und somit z.B. Störimpulse geringer Amplitude noch nicht zum Ansprechen der Schutzschaltung führen. Vorzugsweise erfolgt eine Verringerung um wenigstens eine Diodenflussspannung durch wenigstens eine Diode. In einer Abwandlung kann das wenigstens eine Spannungsformungselement von der Vergleichsschaltung umfasst sein, z.B. als eine einstellbare oder programmierbare Schwellenschaltung eines Komparators, mit dem die Vergleichsschaltung ausgebildet ist.

Bei einer weiteren bevorzugten Ausführungsform der erfindungsgemäßen Schutzschaltung ist das wenigstens eine Spannungsformungselement weiterhin mit wenigstens einem Spannungsspeicherelement ausgebildet zum Bilden und/oder Speichern der Messspannung. Insbesondere aus einer hochfrequent variierenden Spannung am Geräteanschluss kann damit durch eine Glättung ein wenigstens nahezu konstanter Wert für die Messspannung abgeleitet werden. Dabei wird die Messspannung nur so kurzzeitig gespeichert, dass sie beim Auftreten eines Kurzschlusses für eine zuverlässige Ausübung des Schutzes des Geräteanschlusses hinreichend schnell ansteigen kann. Insbesondere kann die Messspannung auf einen anfänglichen Wert geklemmt werden, von dem aus ein zuverlässig schneller Anstieg im Fehlerfall gewährleistet ist.

Nach einer anderen Ausführungsform der erfindungsgemäßen Schutzschaltung ist wenigstens eines des wenigstens einen einen Spannungsanstieg begrenzenden Elements in Reihen- und/oder Kettenschaltung mit dem Schalterelement zwischen dem Geräteanschluss und der äußeren Beschaltung angeordnet. Dadurch wird der Spannungsanstieg am Geräteanschluss im Fehlerfall gegenüber dem Anstieg der Messspannung für ein zuverlässiges Auslösen des Schutzes hinreichend verzögert.

Bei einer weiteren bevorzugten Ausführungsform der erfindungsgemäßen Schutzschaltung ist wenigstens eines des wenigstens einen, in Reihen- und/oder Kettenschaltung mit dem Schalterelement zwischen dem Geräteanschluss und der äußeren Beschaltung angeordneten, einen Spannungsanstieg begrenzenden Elements von wenigstens einem Filterelement zum Filtern einer der äußeren Beschaltung vom Geräteanschluss zuführbaren Spannung gebildet. Damit lassen sich derartige Filterelemente vorteilhaft doppelt nutzen. Eine bevorzugte Anwendung dieser Ausführungsform sind Geräteanschlüsse, die zum Abgeben geschalteter, z.B. pulsweitenmodulierter, Spannungen ausgebildet sind, wie z.B. von "Klasse-D"-Endstufen.

Nach einer anderen Ausführungsform der erfindungsgemäßen Schutzschaltung ist wenigstens eines des wenigstens einen einen Spannungsanstieg begrenzenden Elements in Reihen- und/oder Kettenschaltung zwischen einer Versorgungsspannungsquelle zum Speisen des elektronischen Geräts und dem elektronischen Gerät angeordnet. Beim Auftreten einer Fehlspannung am elektronischen Gerät wird so ein Anstieg einer von der Versorgungsspannungsquelle zum Speisen des elektronischen Geräts bereitgestellten Versorgungsspannung bzw. Betriebsspannung für ein sicheres Ansprechen der Vergleichsstufe und damit der Schutzschaltung begrenzt, insbesondere hinreichend lange verzögert. Außerdem werden dadurch alle von der Versorgungsspannungsquelle gespeisten Schaltungsanordnungen gegen Überspannung geschützt.

Bei einer weiteren bevorzugten Ausführungsform der erfindungsgemäßen Schutzschaltung ist wenigstens eines des wenigstens einen in Reihen- und/oder Kettenschaltung zwischen der Versorgungsspannungsquelle zum Speisen des elektronischen Geräts und dem elektronischen Gerät angeordneten, einen Spannungsanstieg begrenzenden Elements von wenigstens einem Versorgungsspannungs-Glättungselement gebildet. Damit lassen sich derartige Versorgungsspannungs-Glättungselemente vorteilhaft doppelt nutzen.

Eine andere Ausführungsform der erfindungsgemäßen Schutzschaltung umfasst eine Ladungspumpenschaltung, über die das Schalterelement zum Trennen der äußeren Beschaltung vom Geräteanschluss von der Vergleichsstufe steuerbar ist. Diese Ladungspumpenschaltung erzeugt eine Steuerspannung für das Schalterelement, deren Spannungspegel mindestens demjenigen einer Versorgungsspannung des elektronischen Geräts entspricht, wodurch ein sicheres Schalten des Schalterelements gewährleistet ist. Insbesondere übersteigt der Spannungspegel dieser Steuerspannung denjenigen der Versorgungsspannung um einen Spannungsbetrag, der zum sicheren Schalten des Schalterelements erforderlich ist.

Bei einer weiteren bevorzugten Ausführungsform der erfindungsgemäßen Schutzschaltung ist das wenigstens eine zum Trennen der äußeren Beschaltung vom Geräteanschluss ausgebildete Schalterelement mit wenigstens einem MOSFET ausgebildet. Dadurch wird ein sehr geringer Durchgangswiderstand im eingeschalteten Zustand erzielt, wodurch ein Einfluss auf eine vom Geräteanschluss abgegebene Spannung verringert wird. Vorteilhaft ist dabei eine Substratdiode des MOSFET entgegen einer erwarteten Fehlspannung gepolt.

Mit der erfindungsgemäßen Schutzschaltung wird das Eintreten eines Fehlerfalls sehr schnell erkannt und der Strompfad bei einem Überspannungsimpuls aufgetrennt, bevor der Überspannungsimpuls einen Stromimpuls verursachen und damit störende Auswirkungen haben kann. Die Geräteanschlüsse werden in allen Betriebszuständen vor Überspannungen und Überströmen geschützt. Besonders vorteilhaft lassen sich mit der Erfindung elektronische Standardbaugruppen, z.B. integrierte Schaltungen, die für eine niedrige Betriebsspannung, wie z.B. 12 Volt, ausgelegt sind, gefahrlos auch im Zusammenhang mit einem Bordnetz höherer Betriebsspannung, wie z.B. 24 Volt, einsetzen. Damit können z.B. für einen Einsatz in Pkw ausgelegte Standardbauteile z.B. auch in Lkw oder Bussen eingesetzt werden, was kostengünstiger ist und manche Gerätekonzepte erst ermöglicht.

Ausführungsbeispiele der Erfindung sind in der Zeichnung dargestellt und werden im nachfolgenden näher beschrieben, wobei übereinstimmende Elemente in allen Figuren mit denselben Bezugszeichen versehen sind und eine wiederholte Beschreibung dieser Elemente weggelassen wird. Es zeigen:
- Figur 1: einen Schaltungsbaustein nach dem Stand der Technik,
- Figur 2: ein erstes Beispiel für eine erfindungsgemäße Schutzschaltung,
- Figur 3: ein zweites Beispiel für eine erfindungsgemäße Schutzschaltung,
- Figur 4: ein drittes Beispiel für eine erfindungsgemäße Schutzschaltung und
- Figur 5: eine Abwandlung der Schutzschaltung gemäß Figur 4.

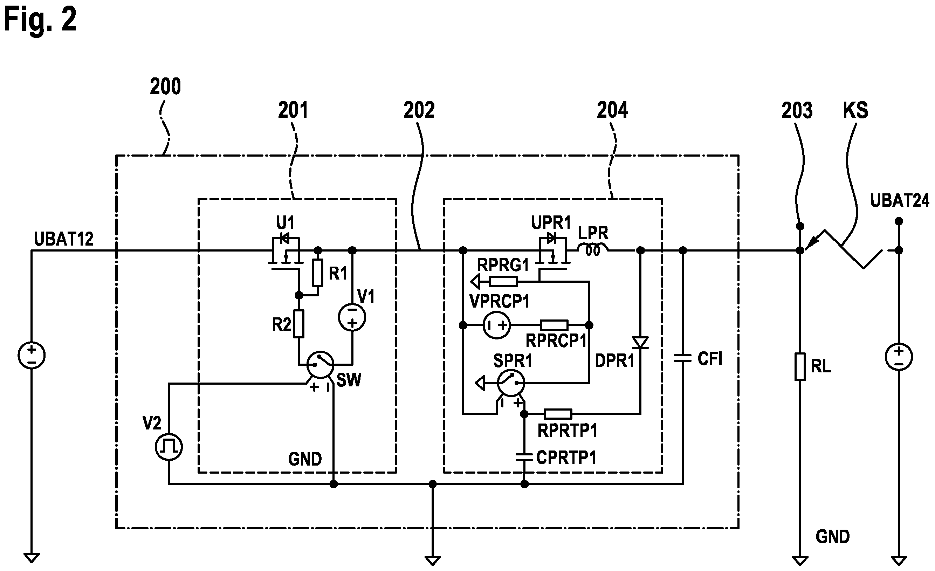

Figur 2 zeigt ein Ausführungsbeispiel der erfindungsgemäßen Schutzschaltung für einen Überspannungsschutz eines mit einem "High-Side-Switch" 201 ausgebildeten elektronischen Geräts 200. Der "High-Side-Switch" 201 umfasst einen MOSFET U1, dessen Aufbau mit dem des MOSFET 106 aus Figur 1 übereinstimmt. Die Source-Drain-Strecke des MOSFET U1 ist zwischen einem ersten Betriebsspannungsanschluss UBAT12, der z.B. eine Versorgungsgleichspannung von 12 Volt aus einem nicht dargestellten Gleichspannungswandler oder einer Batterie liefert, und einem Geräteanschluss 202 angeordnet. Von einer Impulssignalquelle V2,die hier eine Einschaltsignalquelle bildet, wird der MOSFET U1 über eine Schaltstufe SW und einen ohmschen Spannungsteiler R1, R2 mit einer Steuerspannung V1 geschaltet, so dass am Geräteanschluss 202 eine geschaltete Spannung verfügbar ist. Zwischen dem Geräteanschluss 202 und einem Lastanschluss 203, von dem eine Last RL gegen Masse GND verbunden ist, ist eine erfindungsgemäße Schutzschaltung 204 angeordnet. Diese umfasst einen MOSFET UPR1 als Schalterelement zum Trennen der Last RL vom Geräteanschluss 202. Eine Substratdiode des MOSFET UPR1 ist in Flussrichtung eines vom Geräteanschluss 202 zur Last RL fließenden Stroms gepolt. In Reihe mit der Source-Drain-Strecke des MOSFET UPR1 ist eine Impedanz, hier gebildet mit einer Induktivität LPR, angeordnet, die als einen Spannungsanstieg am Geräteanschluss 202 begrenzendes Element wirkt, und zwar zum Begrenzen einer zeitlichen Änderung der eine Vergleichsspannung bildenden Spannung am Geräteanschluss 202 gegenüber einer zeitlichen Änderung der am Lastanschluss 203 anliegenden Spannung. Vom Lastanschluss 203 ist eine ein Spannungsformungselement bildende Reihenschaltung aus einer Diode DPR1, einem Widerstand RPRTP1 und einer Kapazität CPRTP1 an Masse GND geführt, zum Bilden einer Messspannung aus der am Lastanschluss 203 anliegenden Spannung und zum Zuführen der Messspannung an einen Eingang "+" einer Vergleichsstufe SPR1. Einem Eingang "-" der Vergleichsstufe SPR1 wird die Vergleichsspannung zugeführt. Eine Ladungspumpe VPRCP1 ist über einen Vorwiderstand RPRCP1 zwischen dem Geräteanschluss 202 und dem Gate des MOSFET UPR1 sowie an die Vergleichsstufe SPR1 angeschlossen, und das Gate ist über einen Ableitwiderstand RPRG1 an Masse GND gelegt.

Die Funktion der Schutzschaltung 204 wird anhand dreier Betriebsfälle dargestellt. In einem ersten Betriebsfall ist das Gerät 200 ohne Spannungsversorgung, d.h. der erste Betriebsspannungsanschluss UBAT12 ist spannungslos, und es liegt ein Kurzschluß KS vom Lastanschluss 203 gegen einen zweiten Betriebsspannungsanschluss UBAT24 vor, der eine höhere Betriebsspannung von z.B. 24 Volt führt. In einem zweiten Betriebsfall führt der erste Betriebsspannungsanschluss UBAT12 die erste Betriebsspannung, hier z.B. 12 Volt, d.h. die Spannungsversorgung des Geräts 200 und damit der High-Side-Switch 201 und der MOSFET U1 sind aktiv. Ein Kurzschluß gegen den zweiten Betriebsspannungsanschluss UBAT24 liegt nicht vor. Dies ist der störungsfreie Betriebsfall. In einem dritten Betriebsfall führt der erste Betriebsspannungsanschluss UBAT12 wie im zweiten Betriebsfall die erste Betriebsspannung, es tritt jedoch der Kurzschluss KS gegen den zweiten Betriebsspannungsanschluss UBAT24 auf. Diese Betriebsfälle gelten sinngemäß auch für die folgenden Ausführungsbeispiele.

Im ersten Betriebsfall des Geräts 200 ist der MOSFET UPR1 hochohmig, da ihm über den Geräteanschluss 202 keine Betriebsspannung zugeführt wird. Auch die Ladungspumpe VPRCP1 ist nicht aktiv. Das Gate des MOSFET UPR1 liegt somit über den Vorwiderstand RPRCP1 an Masse GND. Die Substratdiode des MOSFET UPR1 sperrt. Daher fließt kein Fehlerstrom über den MOSFET UPR1, und am Geräteanschluss 202 entsteht keine Fehlerspannung. Im zweiten Betriebsfall wird die Spannung vom ersten Betriebsspannungsanschluss UBAT12 an den Geräteanschluss 202 durchgeschaltet. Die Ladungspumpe VPRCP1 ist aktiv und legt am Gate des MOSFET UPR1 eine Spannung an, die höher ist als die Spannung am Drain des MOSFET UPR1, d.h. am Geräteanschluss 202. Der MOSFET UPR1 schaltet durch und die Spannung vom Geräteanschluss 202 steht am Lastanschluss 203 zum Betreiben der Last RL bereit. Im dritten Betriebsfall ist demgegenüber die Spannung am Lastanschluss 203 durch den Kurzschluss KS größer als die Spannung am Geräteanschluss 202. Die Differenz dieser Spannungen aktiviert die Vergleichsstufe SPR1, die bevorzugt einen Komparator mit Eingängen "+" und "-" und einen durch den Komparator gesteuerten Schalter zum Verbinden des Gate des MOSFET UPR1 mit Masse GND umfasst. Der Schalter wird durch den Komparator aktiviert, und durch das an Masse GND gelegte Gate wird der MOSFET UPR1 hochohmig. Da auch die Substratdiode des MOSFET UPR1 sperrt, ist der Rückwärtspfad für den Strom vom Lastanschluss 203 zum Geräteanschluss 202 gesperrt, und an letzterem entsteht keine erhöhte Fehlerspannung. Für die Wirkungsweise der Schutzschaltung 204 beim Auftreten des Kurzschlusses KS, durch den ein Spannungssprung am Lastanschluss 203 angelegt wird, ist es entscheidend, dass durch diesen Spannungssprung keine Überspannung am Geräteanschluss 202 entsteht. Dies wird durch die Impedanz, d.h. hier die Induktivität, LPR verhindert, die als einen Spannungsanstieg am Geräteanschluss 202 begrenzendes Element wirkt. Soll ein Spannungssprung am Lastanschluss 203 auch einen Spannungssprung am Geräteanschluss 202 hervorrufen, müsste sich schlagartig der Strom in der Induktivität LPR umkehren. Durch die Induktivität LPR geschieht dies allerdings verzögert. Die Vergleichsstufe SPR1 kann reagieren, bevor ein Rückwärtsstrom den High-Side-Switch 201 beschädigt und die Spannung am Geräteanschluss 202 ansteigt. Bei einem langsamen Ansteigen der Spannung am Lastanschluss 203 über das Potential der Spannung am Geräteanschluss 202 reagiert die Schutzschaltung 204, sobald die Spannungsdifferenz zwischen der Spannung am Lastanschluss 203 und derjenigen am Geräteanschluss 202 größer ist als die Flussspannung der Diode DPR1, d.h. wenn die Messspannung so groß wird wie die Vergleichsspannung. Diese Spannungsdifferenz ist für den High-Side Switch 201 zulässig.

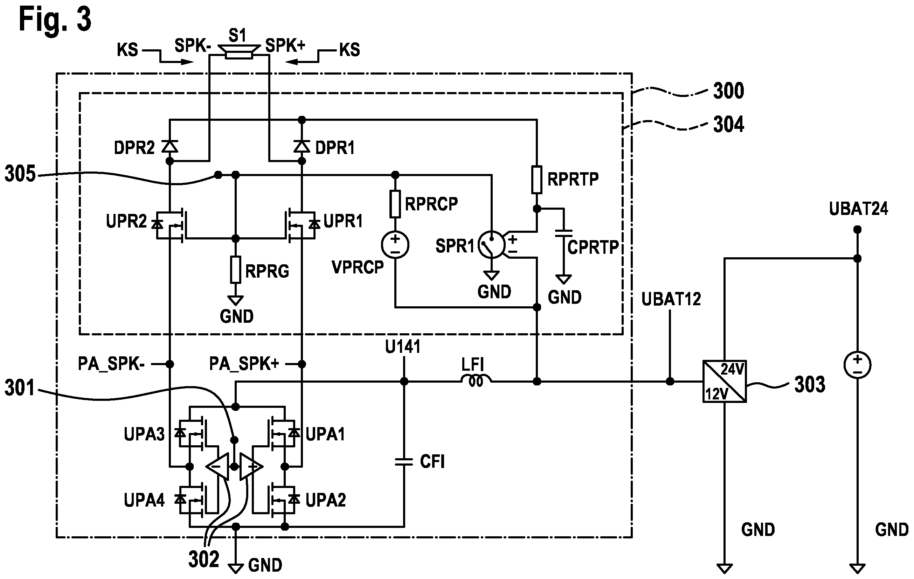

Figur 3 zeigt ein Ausführungsbeispiel der erfindungsgemäßen Schutzschaltung für einen Überspannungsschutz eines mit einer mit vier MOSFETs UPA1, UPA2, UPA3, UPA4 in Totempole-Schaltung ausgebildeten Gegentakt-Endstufe ausgestatteten elektronischen Geräts 300, hier eines Audio-Verstärkers. Substratdioden der MOSFETs UPA1, UPA3 sind in ihrer Flussrichtung von Ausgangsanschlüssen PA_SPK- bzw. PA_SPK+ der Gegentakt-Endstufe, die hier gegen Überspannung bzw. Überstrom zu schützende Geräteanschlüsse bilden, zu deren Versorgungsspannungsanschluss U141 gepolt. Über einen Audioeingang 301 und Vorverstärkerstufen 302 werden die MOSFETs UPA1 und UPA2 bzw. UPA3 und UPA4 im Gegentakt ausgesteuert. Mit Ausgangsspannungen an den Geräteanschlüssen PA_SPK- bzw. PA_SPK+ der Gegentakt-Endstufe wird als Last ein Lautsprecher S1 über Lautsprecheranschlüsse SPK- bzw. SPK+, die hier Lastanschlüsse bilden, gespeist. Der Versorgungsspannungsanschluss U141 ist über ein Glättungsfilter aus einer Längsinduktivität LFI und einer gegen Masse GND geschalteten Querkapazität CFI mit dem ersten Betriebsspannungsanschluss UBAT12 eines zwei Betriebsspannungen bereitstellenden Netzes, z.B. eines Bordnetzes mit 12 Volt und 24 Volt, verbunden. Über einen Gleichspannungswandler 303, hier von 24 Volt auf 12 Volt ist der erste Betriebsspannungsanschluss UBAT12 an den zweiten Betriebsspannungsanschluss UBAT24 angeschlossen. Zwischen den Geräteanschlüssen PA_SPK-, PA_SPK+ und den Lastanschlüssen SPK-, SPK+ ist eine erfindungsgemäße Schutzschaltung 304 angeordnet. Diese umfasst je einen MOSFET UPR1, UPR2 als Schalterelement zum Trennen je eines der Lastanschlüsse SPK-, SPK+ von den Geräteanschlüssen PA_SPK-, PA_SPK+. Substratdioden der MOSFETs UPR1, UPR2 sind in Flussrichtung eines von den Geräteanschlüssen PA_SPK-, PA_SPK+ zur Last S1 fließenden Stroms gepolt. Von den Lastanschlüssen SPK-, SPK+ ist eine ein Spannungsformungselement bildende Schaltung aus zwei Dioden DPR1, DPR2, einem Widerstand RPRTP und einer Kapazität CPRTP an Masse GND geführt, wobei je eine der Dioden DPR1, DPR2 mit je einem der Lastanschlüsse SPK-, SPK+ verbunden ist, zum Bilden einer Messspannung aus an den Lastanschlüssen SPK-, SPK+ anliegenden Spannungen und zum Zuführen der Messspannung an den Eingang "+" der Vergleichsstufe SPR1. Dem Eingang "-" der Vergleichsstufe SPR1 wird als Vergleichsspannung die Betriebsspannung vom ersten Betriebsspannungsanschluss UBAT12 zugeführt. Eine Ladungspumpe VPRCP ist über einen Vorwiderstand RPRCP zwischen dem ersten Betriebsspannungsanschluss UBAT12 und den am gemeinsamen Gateanschluss 305 verbundenen Gates der MOSFETs UPR1, UPR2 sowie an die Vergleichsstufe SPR1 angeschlossen, und der Gateanschluss 305 ist über einen Ableitwiderstand RPRG an Masse GND gelegt. Die Längsinduktivität LFI und die Querkapazität CFI wirken als einen Spannungsanstieg an den Geräteanschlüssen PA_SPK-, PA_SPK+ begrenzendes Element, und zwar zum Begrenzen einer zeitlichen Änderung der eine Vergleichsspannung bildenden Spannung an den Geräteanschlüssen PA_SPK-, PA_SPK+ gegenüber einer zeitlichen Änderung der an den Lastanschlüssen SPK-, SPK+ anliegenden Spannungen.

Im ersten Betriebsfall, in dem ein Kurzschluss KS eines oder beider Lastanschlüsse SPK+, SPK- gegen den zweiten Betriebsspannungsanschluss UBAT24 auftritt, sind die MOSFETs UPR1, UPR2 hochohmig, da der Gateanschluss 305 ohne Betriebsspannung keine Spannung von der Ladungspumpe VPRCP erhält und daher über den Ableitwiderstand RPRG an Masse GND liegt. Die Substratdioden von UPR1, UPR2 sperren. Es fließt kein Fehlerstrom, an den Geräteanschlüssen PA_SPK-, PA_SPK+ entsteht keine Fehlerspannung. Im zweiten Betriebsfall werden die Spannungen an den Geräteanschlüssen PA_SPK+, PA_-SPK- vom Audioeingang im Gegentakt ausgesteuert, d.h. schwanken gegenläufig zwischen Massepotential und der Spannung am Versorgungsspannungsanschluss U141 und nehmen davon im zeitlichen Mittel den halben Wert ein. Die Ladungspumpe VPRCP erzeugt am Gateanschluss 305 eine Spannung, die höher ist als die Spannungen an den Geräteanschlüssen PA_SPK+, PA_SPK-. Die MOSFETs UPR1, UPR2 leiten und die Spannungen an den Geräteanschlüssen PA_SPK+, PA_SPK- gelangen über die sehr geringen Einschaltwiderstände der MOSFETs UPR1, UPR2 an die Lastanschlüsse SPK+, SPK-. Im dritten Betriebsfall sind demgegenüber die Spannungen an einem oder beiden Lastanschlüssen SPK+, SPK- durch den Kurzschluss KS größer als die Spannungen an den Geräteanschlüssen PA_SPK+, PA_SPK-. Die Differenz dieser Spannungen aktiviert die Vergleichsstufe SPR1 über deren Komparator. Der Schalter der Vergleichsstufe SPR1 wird durch den Komparator aktiviert, und durch den an Masse GND gelegten Gateanschluss werden die MOSFETs UPR1, UPR2 hochohmig. Da auch die Substratdioden der MOSFETs UPR1, UPR2 sperren, sind die Rückwärtspfade für Ströme von den Lastanschlüssen SPK+, SPK- zu den Geräteanschlüssen PA_SPK+, PA_SPK- gesperrt, und an letzteren entstehen keine erhöhten Fehlerspannungen. Bei einem langsamen Ansteigen der Spannungen an einem oder beiden Lastanschlüssen SPK+, SPK- über das Potential am Versorgungsspannungsanschluss U141 reagiert die Schutzschaltung 304, sobald die Spannungsdifferenz zwischen Messspannung und Vergleichsspannung größer ist als die Flussspannung der Dioden DPR1 bzw. DPR2. Diese geringe Spannungsdifferenz ist für die Endstufen zulässig. Bei einer schlagartig auftretenden hohen Spannung an den Lastanschlüssen SPK+, SPK- reagiert die Schutzschaltung 304 so schnell, dass die Fehlerspannung bzw. der Fehlerstrom an den Geräteanschlüssen PA_SPK+, PA_SPK- innerhalb der zulässigen Werte bleibt.

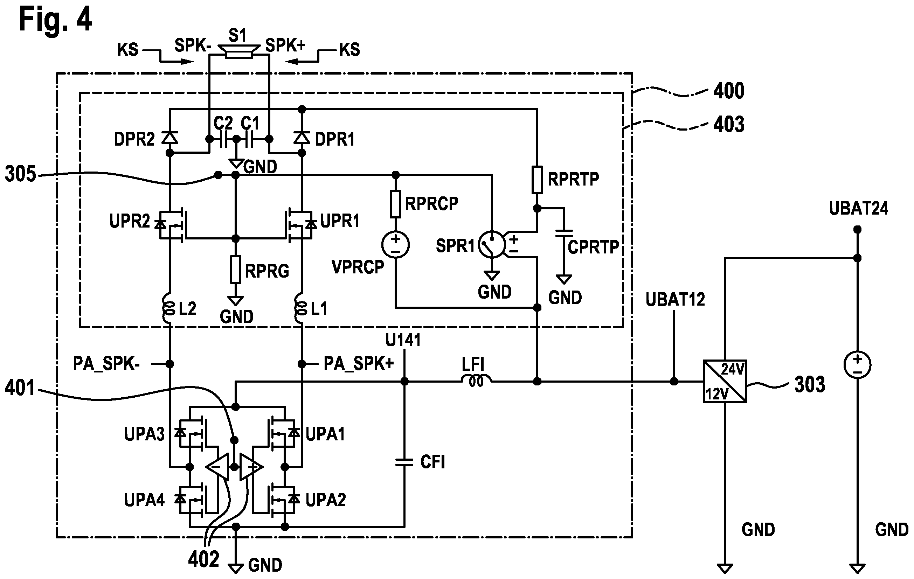

Figur 4 zeigt ein elektronisches Gerät 400 mit einer "Klasse-D"-Endstufe, das weitgehend baugleich mit dem elektronischen Gerät 300 ist. An die Stelle des Audioeingangs 301 und der Vorverstärkerstufen 302 treten hier ein PWM-Eingang 401 bzw. PWM-Treiberstufen 402, über die die MOSFETs UPA1 bis UPA4 mit einem PWM-Signal im Taktzyklus von ca. 100kHz bis 2 MHz zwischen Masse GND und Versorgungsspannungsanschluss U141 hin und her geschaltet werden. Diese hochfrequente Wechselspannung wird von den Geräteanschlüssen PA_SPK+, PA_SPK- über ein EMV-Filter, d.h. Entstörfilter, aus je einer Filterinduktivität L1, L2 und je einer Filterkapazität C1, C2 der Last S1 zugeführt. Filterinduktivitäten L1, L2 und Filterkapazitäten C1, C2 wirken außerdem als weiteres einen Spannungsanstieg an den Geräteanschlüssen PA_SPK-, PA_SPK+ begrenzendes Element, und zwar zum Begrenzen einer zeitlichen Änderung der eine Vergleichsspannung bildenden Spannung an den Geräteanschlüssen PA_-SPK-, PA_SPK+ gegenüber einer zeitlichen Änderung der an den Lastanschlüssen SPK-, SPK+ anliegenden Spannungen, bilden Bestandteile einer Schutzschaltung 403 und sichern ein rechtzeitiges Abschalten bei Spannungssprüngen an den Lastanschlüssen SPK+, SPK-.

Die Wirkungsweise der Schutzschaltung 403 entspricht im Wesentlichen derjenigen der Schutzschaltung 304. Steigt im dritten Betriebsfall die Spannung an einem oder beiden Lastanschlüssen SPK+, SPK- und damit die Messspannung durch einen Kurzschluss KS zum zweiten Betriebsspannungsanschluss UBAT24 impulsartig über die Spannung am Versorgungsspannungsanschluss U141 an, ändert sich der Strom durch eine oder beide Filterspulen L1, L2 und damit die Vergleichsspannung am ersten Betriebsspannungsanschluss UBAT12 nur verzögert. Die Differenz von Messspannung und Vergleichsspannung ändert sich schnell und aktiviert die Vergleichsstufe SPR1 wie beschrieben.

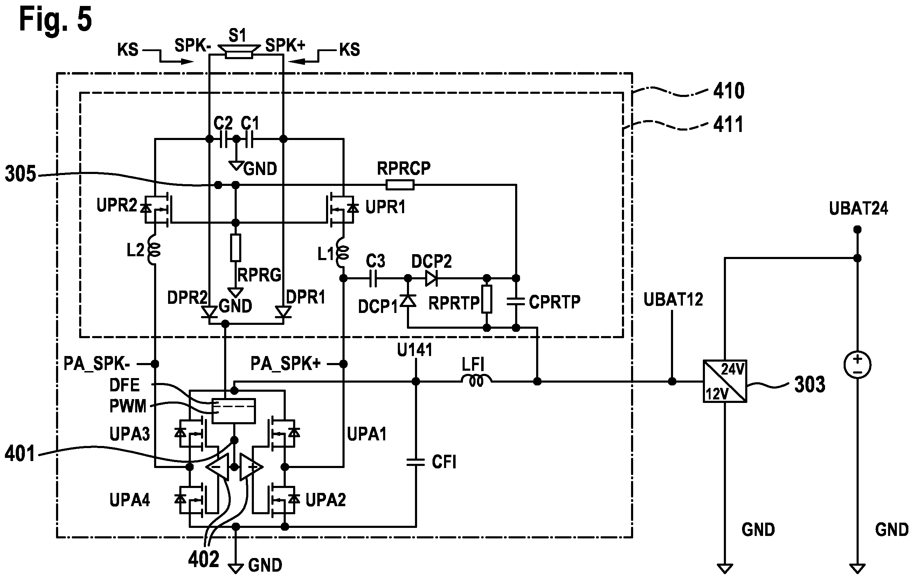

Figur 5 zeigt eine Abwandlung 410 des elektronischen Geräts 400 mit einer Schutzschaltung 411 und einer PWM-Steuerstufe PWM, die eine Prüfstufe DFE umfasst, mit der Spannungsfehler an den Geräteanschlüssen PA_SPK-, PA_-SPK+ wie z.B. unsymmetrische Last oder Spannungen außerhalb des Spannungsbereich der Versorgungsspannung am Versorgungsspannungsanschluss U141 detektierbar sind. Dazu werden die Spannungen an den Lastanschlüssen SPK+, SPK- über Dioden DRP1, DRP2 der Prüfstufe DFE zugeführt. Im Fehlerfall schaltet die PWM-Steuerstufe PWM zum Selbstschutz die MOSFETs UPA1 bis UPA4 ab. Die Schutzschaltung 411 umfasst weiterhin eine in Figur 5 detailliert dargestellte Ladungspumpe, die eine Spannungsverdopplungsschaltung aus zwei Dioden DCP1, DCP2 enthält, die über eine Kapazität C3 mit der Rechteckspannung aus dem Geräteanschluss PA_SPK+ gespeist wird. Die Kapazität CPRTP hält die Spannung der Ladungspumpe, die über den Vorwiderstand RPRCP dem Gateanschluss 305 zugeführt wird, für eine vom parallelgeschalteten Widerstand RPRTP bestimmte Zeit und liefert eine positive Gate-Source-Spannung an die MOSFETs UPR1, UPR2. In den beschriebenen Betriebsfällen reagiert die Schutzschaltung 411 wie die Schutzschaltung 403 nach Figur 4, wobei im Fehlerfall durch Abschalten der MOSFETs UPA1 bis UPA4 auch die Ladungspumpe abgeschaltet und die MOSFETs UPR1, UPR2 gesperrt werden.

Mit der erfindungsgemäßen Schutzschaltung können in einer weiteren Ausführungsform auch Geräteanschlüsse geschützt werden, die zum Führen von Spannungen, insbesondere geschalteten Spannungen, besonders bevorzugt geschalteten Ausgangsspannungen, die geringer sind als eine Versorgungsspannung des Geräts, ausgebildet sind. Dies sind z.B. USB Anschlüsse eines Autoradios, an denen eine geschaltete Spannung von 5V anliegt. Auch diese können mit der erfindungsgemäßen Schutzschaltung geschützt werden, wenn die Vergleichsspannung der geschalteten Ausgangsspannung entspricht, d.h. hier z.B. der Spannung von 5V eines USB-Anschlusses.

## Patentansprüche

1. Schutzschaltung (204; 304; 403; 411) für einen Überspannungs- und/oder Überstromschutz eines für eine äußere Beschaltung, d.h. zum Verbinden mit einer Last (RL), eingerichteten Geräteanschlusses (202; PA_SPK-, PA_SPK+) eines elektronischen Geräts (200; 300; 400; 410), für ein Kraftfahrzeug, umfassend eine Vergleichsstufe (SPR1) zum Vergleichen einer aus einer an der äußeren Beschaltung, nämlich der Last, anliegenden Spannung gebildeten Messspannung mit einer Vergleichsspannung, d.h. mit einer Versorgungsspannung des elektronischen Geräts (200; 300; 400; 410), sowie wenigstens ein in Reihenschaltung zwischen dem Geräteanschluss (202; PA_SPK-, PA_SPK+) und der äußeren Beschaltung angeordnetes, von der Vergleichsstufe (SPR1) steuerbares Schalterelement (UPR1, UPR2) zum Trennen der äußeren Beschaltung vom Geräteanschluss (202; PA_SPK-, PA_SPK+), sowie wenigstens ein einen Spannungsanstieg am Geräteanschluss (202; PA_SPK-, PA_SPK+) begrenzendes Element, ausgebildet mit wenigstens einem induktiven Schaltungselement (LPR; LFI; L1, L2) und/oder wenigstens einem kapazitiven Schaltungselement (CFI) und/oder wenigstens einem resistiven Schaltungselement, zum Begrenzen einer zeitlichen Änderung der Vergleichsspannung gegenüber einer zeitlichen Änderung der an der äußeren Beschaltung anliegenden Spannung und **gekennzeichnet durch** wenigstens ein Spannungsformungselement, ausgebildet mit wenigstens einer Diode (DPR1, DPR2), zum Bilden der Messspannung aus der an der äußeren Beschaltung anliegenden Spannung und zum Zuführen der Messspannung an die Vergleichsstufe (SPR1).

2. Schutzschaltung (204; 304; 403; 411) nach Anspruch 1, **dadurch gekennzeichnet, dass** das wenigstens eine Spannungsformungselement weiterhin mit wenigstens einem Spannungsspeicherelement (CPRTP; CPRTP1) ausgebildet ist zum Bilden und/oder Speichern der Messspannung.

3. Schutzschaltung (204; 304; 403; 411) nach Anspruch 1 oder nach Anspruch 2 in Verbindung mit Anspruch 1, **dadurch gekennzeichnet, dass** wenigstens eines des wenigstens einen einen Spannungsanstieg begrenzenden Elements in Reihen- und/oder Kettenschaltung mit dem Schalterelement (UPR1, UPR2) zwischen dem Geräteanschluss (202; PA_SPK-, PA_SPK+) und der äußeren Beschaltung angeordnet ist.

4. Schutzschaltung (204; 304; 403; 411) nach Anspruch 3, **dadurch gekennzeichnet, dass** wenigstens eines des wenigstens einen, in Reihen- und/oder Kettenschaltung mit dem Schalterelement (UPR1, UPR2) zwischen dem Geräteanschluss (202; PA_SPK-, PA_SPK+) und der äußeren Beschaltung angeordneten, einen Spannungsanstieg begrenzenden Elements von wenigstens einem Filterelement (L1, L2, C1, C2) zum Filtern einer der äußeren Beschaltung vom Geräteanschluss (202; PA_SPK-, PA_SPK+) zuführbaren Spannung gebildet ist.

5. Schutzschaltung (204; 304; 403; 411) nach Anspruch 1 oder nach Anspruch 2 in Verbindung mit Anspruch 1 oder nach Anspruch 3 oder nach Anspruch 4, **dadurch gekennzeichnet, dass** wenigstens eines des wenigstens einen einen Spannungsanstieg begrenzenden Elements in Reihen- und/oder Kettenschaltung zwischen einer Versorgungsspannungsquelle (UBAT12) zum Speisen des elektronischen Geräts (200; 300; 400; 410) und dem elektronischen Gerät (200; 300; 400; 410) angeordnet ist.

6. Schutzschaltung (204; 304; 403; 411) nach Anspruch 5, **dadurch gekennzeichnet, dass** wenigstens eines des wenigstens einen in Reihen- und/oder Kettenschaltung zwischen der Versorgungsspannungsquelle (UBAT12) zum Speisen des elektronischen Geräts (200; 300; 400; 410) und dem elektronischen Gerät (200; 300; 400; 410) angeordneten, einen Spannungsanstieg begrenzenden Elements von wenigstens einem Versorgungsspannungs-Glättungselement (LFI, CFI) gebildet ist.

7. Schutzschaltung (204; 304; 403; 411) nach einem oder mehreren der vorhergehenden Ansprüche, **gekennzeichnet durch** eine Ladungspumpenschaltung (VPRCP; VPRCP1), über die das Schalterelement (UPR1, UPR2) zum Trennen der äußeren Beschaltung vom Geräteanschluss (202; PA_SPK-, PA_SPK+) von der Vergleichsstufe (SPR1) steuerbar ist.

8. Schutzschaltung (204; 304; 403; 411) nach einem oder mehreren der vorhergehenden Ansprüche, **dadurch gekennzeichnet, dass** das wenigstens eine zum Trennen der äußeren Beschaltung vom Geräteanschluss (202; PA_SPK-, PA_SPK+) ausgebildete Schalterelement (UPR1, UPR2) mit wenigstens einem MOSFET ausgebildet ist.

## Claims

1. Protective circuit (204; 304; 403; 411) for overvoltage and/or overcurrent protection of a device terminal (202; PA_SPK-, PA_SPK+) of an electronic device (200; 300; 400; 410), for a motor vehicle, said device terminal being configured for external circuitry, i.e. for connection to a load (RL), comprising a comparison stage (SPR1) for comparing a measurement voltage, which is formed from a voltage present at the external circuitry, namely the load, with a comparison voltage, i.e. with a supply voltage of the electronic device (200; 300; 400; 410), and also at least one switch element (UPR1, UPR2), which is arranged in a manner connected in series between the device terminal (202; PA_SPK-, PA_SPK+) and the external circuitry and is controllable by the comparison stage (SPR1), for disconnecting the external circuitry from the device terminal (202; PA_SPK-, PA_SPK+), and also at least one element which limits a voltage rise at the device terminal (202; PA_SPK-, PA_SPK+), embodied with at least one inductive circuit element (LPR; LFI; L1, L2) and/or at least one capacitive circuit element (CFI) and/or at least one resistive circuit element, for limiting a change in the comparison voltage over time in relation to a change in the voltage present at the external circuitry over time, and **characterized by** at least one voltage shaping element, embodied with at least one diode (DPR1, DPR2), for forming the measurement voltage from the voltage present at the external circuitry and for feeding the measurement voltage to the comparison stage (SPR1).

2. Protective circuit (204; 304; 403; 411) according to Claim 1, **characterized in that** the at least one voltage shaping element is furthermore embodied with at least one voltage storage element (CPRTP; CPRTP1) for forming and/or storing the measurement voltage.

3. Protective circuit (204; 304; 403; 411) according to Claim 1 or according to Claim 2 in conjunction with Claim 1, **characterized in that** at least one of the at least one element which limits a voltage rise is arranged in a manner connected in series and/or chain-connected with the switch element (UPR1, UPR2) between the device terminal (202; PA_SPK-, PA_SPK+) and the external circuitry.

4. Protective circuit (204; 304; 403; 411) according to Claim 3, **characterized in that** at least one of the at least one element which limits a voltage rise and is arranged in a manner connected in series and/or chain-connected with the switch element (UPR1, UPR2) between the device terminal (202; PA_SPK-, PA_SPK+) and the external circuitry is formed by at least one filter element (L1, L2, C1, C2) for filtering a voltage that can be fed to the external circuitry from the device terminal (202; PA_SPK-, PA_SPK+).

5. Protective circuit (204; 304; 403; 411) according to Claim 1 or according to Claim 2 in conjunction with Claim 1 or according to Claim 3 or according to Claim 4, **characterized in that** at least one of the at least one element which limits a voltage rise is arranged in a manner connected in series and/or chain-connected between a supply voltage source (UBAT12) for supplying the electronic device (200; 300; 400; 410) and the electronic device (200; 300; 400; 410).

6. Protective circuit (204; 304; 403; 411) according to Claim 5, **characterized in that** at least one of the at least one element which limits a voltage rise and is arranged in a manner connected in series and/or chain-connected between the supply voltage source (UBAT12) for supplying the electronic device (200; 300; 400; 410) and the electronic device (200; 300; 400; 410) is formed by at least one supply voltage smoothing element (LFI, CFI).

7. Protective circuit (204; 304; 403; 411) according to one or more of the preceding claims, **characterized by** a charge pump circuit (VPRCP; VPRCP1), via which the switch element (UPR1, UPR2) for disconnecting the external circuitry from the device terminal (202; PA_SPK-, PA_SPK+) is controllable by the comparison stage (SPR1).

8. Protective circuit (204; 304; 403; 411) according to one or more of the preceding claims, **characterized in that** the at least one switch element (UPR1, UPR2) embodied for disconnecting the external circuitry from the device terminal (202; PA_SPK-, PA_SPK+) is embodied with at least one MOSFET.

## Revendications

1. Circuit de protection (204 ; 304 ; 403 ; 411) destiné à la protection contre les surtensions et/ou les surintensités d'une borne d'appareil (202 ; PA_SPK-, PA_SPK+) d'un appareil électronique (200 ; 300 ; 400 ; 410), ladite borne étant conçue pour montage de circuit extérieure, c'est-à-dire pour être reliée à une charge (RL, ledit circuit de protection étant destiné à un véhicule automobile et comprenant un étage de comparaison (SPR1) destiné à comparer une tension de mesure, formée à partir d'une tension présente au niveau du montage de circuit extérieur, c'est-à-dire de la charge, à une tension de comparaison, c'est-à-dire une tension d'alimentation de l'appareil électronique (200 ; 300 ; 400 ; 410), et au moins un élément de commutation (UPR1, UPR2) qui est disposé en série entre la borne d'appareil (202 ; PA_SPK-, PA_SPK+) et le montage de circuit extérieur, qui peut être commandé par l'étage de comparaison (SPR1) et qui est destiné à séparer le montage de circuit extérieur de la borne d'appareil (202 ; PA_SPK-, PA_SPK+), et au moins un élément qui limite une élévation de tension au niveau de la borne d'appareil (202 ; PA_SPK-, PA_SPK+) et qui est conçu avec au moins un élément de circuit inductif (LPR ; LFI ; L1, L2) et/ou au moins un élément de circuit capacitif (CFI) et/ou au moins un élément de circuit résistif pour limiter une variation temporelle de la tension de comparaison par rapport à une variation temporelle de la tension appliquée au montage de circuit extérieur et **caractérisé par** au moins un élément de mise en forme de tension qui est conçu avec au moins une diode (DPR1, DPR2) pour former la tension de mesure à partir de la tension appliquée au montage de circuit extérieur et pour fournir la tension de mesure à l'étage de comparaison (SPR1).

2. Circuit de protection (204 ; 304 ; 403 ; 411) selon la revendication 1, **caractérisé en ce que** l'au moins un élément de mise en forme de tension est en outre conçu avec au moins un élément de mémorisation de tension (CPRTP ; CPRTP1) pour former et/ou mémoriser la tension de mesure.

3. Circuit de protection (204 ; 304 ; 403 ; 411) selon la revendication 1 ou selon la revendication 2 en liaison avec la revendication 1, **caractérisé en ce qu'**au moins un de l'au moins un élément limitant une élévation de tension est connecté en série et/ou en chaîne avec l'élément de commutation (UPR1, UPR2) entre la borne d'appareil (202 ; PA_SPK-, PA_SPK+) et le montage de circuit extérieur.

4. Circuit de protection (204 ; 304 ; 403 ; 411) selon la revendication 3, **caractérisé en ce qu'**au moins un de l'au moins un élément limitant une élévation de tension, disposé en série et/ou en chaîne avec l'élément de commutation (UPR1, UPR2) entre la borne d'appareil (202 ; PA_SPK-, PA_SPK+) et le montage de circuit extérieur est formé par au moins un élément de filtrage (L1, L2, C1, C2) destiné à filtrer une tension qui peut être amenée au montage de circuit extérieur par la borne d'appareil (202 ; PA_SPK-, PA_SPK+).

5. Circuit de protection (204 ; 304 ; 403 ; 411) selon la revendication 1 ou selon la revendication 2 en liaison avec la revendication 1 ou selon la revendication 3 ou selon la revendication 4, **caractérisé en ce qu'**au moins un de l'au moins un élément limitant une élévation de tension est disposé en série et/ou en chaîne entre une source de tension d'alimentation (UBAT12), destinée à alimenter l'appareil électronique (200 ; 300 ; 400 ; 410), et l'appareil électronique (200 ; 300 ; 400 ; 410).

6. Circuit de protection (204 ; 304 ; 403 ; 411) selon la revendication 5, **caractérisé en ce qu'**au moins l'un de l'au moins un élément limitant une élévation de tension disposé en série et/ou en chaîne entre la source de tension d'alimentation (UBAT12), destiné à alimenter l'appareil électronique (200 ; 300 ; 400 ; 410), et l'appareil électronique (200 ; 300 ; 400 ; 410), est formé par au moins un élément de lissage de tension d'alimentation (LFI, CFI).

7. Circuit de protection (204 ; 304 ; 403 ; 411) selon l'une ou plusieurs des revendications précédentes, **caractérisé par** un circuit de pompage de charge (VPRCP ; VPRCP1) qui permet de commander l'élément de commutation (UPR1, UPR2) pour séparer le montage de circuit extérieur de la borne d'appareil (202 ; PA_SPK-, PA_SPK+) de l'étage de comparaison (SPR1).

8. Circuit de protection (204 ; 304 ; 403 ; 411) selon une ou plusieurs des revendications précédentes, **caractérisé en ce que** l'au moins un élément de commutation (UPR1, UPR2), qui est conçu pour séparer le montage de circuit extérieur de la borne d'appareil (202 ; PA_SPK-, PA_SPK+), est conçu avec au moins un MOSFET.
